## Europäisches Patentamt
## European Patent Office
## Office européen des brevets

(19)

(11) Veröffentlichungsnummer: **0 172 414**
**B1**

(12)

# EUROPÄISCHE PATENTSCHRIFT

(45) Veröffentlichungstag der Patentschrift :
13.12.89

(51) Int. Cl.⁴ : **F 04 B 21/08**, F 16 J 15/16

(21) Anmeldenummer : 85109017.5

(22) Anmeldetag : 19.07.85

(54) Dichtungsanordnung für hochfrequent oszillierende Plunger.

(30) Priorität : 09.08.84 DE 3429334

(43) Veröffentlichungstag der Anmeldung :
26.02.86 Patentblatt 86/09

(45) Bekanntmachung des Hinweises auf die Patenterteilung : 13.12.89 Patentblatt 89/50

(84) Benannte Vertragsstaaten :
AT CH DE FR GB IT LI

(56) Entgegenhaltungen :
DE–A– 2 239 387
DE–C–    103 938
DE–C–    343 277
FR–A– · 703 832

(73) Patentinhaber : Parker-Prädifa GmbH
Arnold-Jäger-Strasse 1
D-7120 Bietigheim-Bissingen (DE)

(72) Erfinder : Lehmann, Werner
Baiselberg 1
D-7123 Sachsenheim-Ochsenbach (DE)

(74) Vertreter : Wolff, Michael, Dipl.-Phys.
Kirchheimer Strasse 69
D-7000 Stuttgart 75 (DE)

## Beschreibung

Die Erfindung betrifft eine Förderpumpe mit einem zwischen der Hochdruckseite und der Niederdruckseite hochfrequent oszillierenden Plunger oder dergleichen, mit einem vom Plunger abgedeckten ringnutförmigen Einbauraum rechteckiger Querschnittfläche und mit einer in dem Einbauraum statisch unbeweglichen axialen Dichtungsanordnung von Stützring auf der Hochdruckseite, Dichtungsring und Backring auf der Niederdruckseite, wobei a) mittig in dem Einbauraum der einstückige Dichtungsring aus gewebeverstärktem Kunststoffmaterial mit einer im Querschnittsprofil ausgerundeten Ringnut zwischen einer den Grund des Einbauraumes statisch abdichtenden Haftlippe und einer den Plunger dynamisch abdichtenden Dichtlippe angeordnet ist, wobei zwei der hochdruckseitigen Stirnfläche des Einbauraumes zugewandte ringförmige ebene Stirnflächen der beiden Lippen bezüglich der mit der Plungerachse zusammenfallenden Achse der Anordnung koaxial und gegebenenfalls koplanar sind, b) niederdruckseitig in dem Einbauraum der wesentlich härtere scheibenähnliche Dackring angeordnet ist, der sich an der niederdruckseitigen Stirnfläche des Einbauraumes sowie an dessen Grund abstützt und eine Extrusion des Dichtungsringes in den an den Einbauraum niederdruckseitig anschließenden Ringspalt zwischen Plunger und Wandung des Einbauraumes verhindert; und c) hochdruckseitig in dem Einbauraum der steife Stützring angeordnet ist, der einerseits am Dichtungsring und andererseits flächig an der hochdruckseitigen Stirnfläche des Einbauraumes anliegt.

Flüssigkeiten wie wässrige Waschmittellösungen fördernde sogenannte Axial- (oder Radial-) Plungerpumpen weisen keramikbeschichtete Plunger auf, die Axialschwingungen mit bis zu 2 000 Doppelhüben von etwa 10 mm Länge in beispielsweise je 4/100 Sekunden pro Minute ausführen, was der Drehzahl des Antriebsmotors der Pumpe entspricht, um mittels des Zurückweichens der motorfernen Stirnfläche des Plungers oft nahezu bis an den Siedepunkt hocherhitzte Flüssigkeit aus einem Reservoir während eines Vorhubes anzusaugen und die angesaugte Flüssigkeit nach Schließen eines vibrierenden Ventiles in der Saugleitung während des Rückhubes des Plungers bei bis zu 300 bar durch eine schließbare Düse zu drücken. Der Unterdruck in der Saugleitung kann bis zu 0,3 bar betragen. Der im wesentlichen unter Atmosphärendruck stehende niederdruckseitige Ringspalt zwischen Plunger und Wandung des Einbauraumes ist auch dann, wenn diese Wandung zur Plungerführung ausgebildet ist mittels des Backringes zur Hochdruckseite hin begrenzt. In jedem Fall muß aber der entsprechende hochdruckseitige Ringspalt, der den Plunger nicht führt, ungefähr 1 mm breit sein, damit der Hochdruck Zugang zur im wesentlichen V-förmigen Ringnut des Dichtungsringes hat, dessen dynamische Dichtlippe beaufschlagt sein muß.

Bei einer fast ausschließlich verbreiteten bekannten Dichtungsanordnung der eingangs genannten Art ist der Stützring ein flachkeilförmiges Gebilde mit zwei gegen die Niederdruckseite konvergierenden Radialflächen, einer hochdruckseitigen ebenen Anlagefläche und einer niederdruckseitigen konvexen Halbtorusfläche wobei alle vier Flächen glatt ineinander übergehen. Der Krümmungsradius der Torusfläche des Stützringes ist dabei kleiner als der Krümmungsradius am Grund der Ringnut des Dichtungsringes, sodaß sich diese beiden Ringe im Idealfall längs einer Kreislinie in einer Ebene berühren, auf der die Plunger- und Anordnungsachse senkrecht steht. Damit wird eine radiale Beweglichkeit der beiden Lippen des Dichtungsringes bezweckt.

An der bekannten Dichtungsanordnung ist erfahrungsgemäß nachteilig, daß der Dichtungsring trotz Gewebeverstärkung bereits nach einigen Stunden Pumpenbetrieb verschlissen ist und ausgewechselt werden muß. Der Verschleiß speziell der dynamischen Dichtlippe des Dichtungsringes rührt daher, daß diese sich ebenso wie die statische Haftlippe in etwa 1 mm lichter axialer Entfernung von der hochdruckseitigen Stirnfläche des Einbauraumes befindende Lippe praktisch ohne Schmierung an der keramischen Oberfläche des ungefähr über die gleiche Distanz oszillierenden Plungers reibt, sodaß das Kunststoffmaterial des mit radialer Vorspannung in den Einbauraum eingesetzten Dichtungsringes an der radial inneren Dichtfläche abgetragen wird, bis das in das Kunststoffmaterial wie synthetischen Gummi eingebettete verstärkende Gewebe, beispielsweise aus Baumwolle, erreicht ist und ebenfalls zerrieben wird. Der schnelle und starke Verschleiß des Dichtungsringes der bekannten Dichtungsanordnung ist vermutlich auch darauf zurückzuführen, daß das hochdruckseitige freie Ende der dynamischen Dichtlippe beim Verdichtungshub des Plungers in den Hochdruckspalt extrudiert wird. Es könnte auch sein, daß über die axiale Länge der dynamischen Dichtlippe variierende Haft- und Gleitreibungsverhältnisse zu unterschiedlichen Insichbewegungen der Dichtlippe führen, obwohl diese in Folge der Gewebeverstärkung eingeschränkt elastisch ist.

Um den Nachteil des gründlichen Verschleisses des Dichtungsringes der bekannten Dichtungsanordnung zu vermeiden ist schon vorgeschlagen worden, den dichtenden Lippenring in einem Metallring mit L-förmigem Profil zu fassen, welcher mit Übermaß in den Einbauraum eingepaßt wird. Abgesehen davon, daß in diesem Fall der Einbauraum von einer Seite her zugänglich gemacht werden muß, weil der Dichtungsring nicht durch radiales Einschnappen im Einbauraum gelagert werden kann, sind die Gestehungskosten eines solchen metallarmierten Dichtungsringes verhältnismäßig hoch, ohne zu einer Gestaltung zu führen, die den Verschleiß dadurch wesentlich herabsetzt, daß die Beweglichkeit des Dichtungsringes beschränkt wird.

Der Erfindung liegt daher die Aufgabe zugrunde, eine Förderpumpe zu schaffen, deren Dichtungsanordnung den genannten Nachteil wirkungsvoll vermeidet, indem die Verschleißfestigkeit des Dichtungsringes erheblich erhöht wird.

Diese Aufgabe ist bei einer Förderpumpe der eingangs genannten Art erfindungsgemäß dadurch gelöst, daß der Stützring an den Stirnflächen der Lippen des Dichtungsringes eben anliegt, sich am Grund des Einbauraumes abstützt und sich radial nach innen so weit erstreckt, daß der Stützring eine Extrusion der dynamischen Dichtlippe in den an den Einbauraum hochdruckseitig anschließenden ringförmigen Hochdruckspalt zwischen dem Plunger und der Wandung des Einbauraumes verhindert; und daß die zwei einander abgekehrten axialen Stirnseiten des Stützringes mittels wenigstens eines Durchbruches, der das Druckmedium vom Hochdruckspalt in die Ringnut des Dichtungsringes leitet, miteinander verbunden sind.

Durch den erfindungsgemäßen Stützring, der als Frontring ein Gegenstück zum Dackring darstellt, wird vorteilhafterweise eine Beseitigung der tatsächlichen und vermuteten Ursachen des Verschleisses des Dichtungsringes beseitigt, sodaß dieser eine vielfach höhere Lebensdauer hat als ein Dichtungsring gleicher Ausführung, wenn dieser in der bekannten Dichtungsanordnung verwendet wird.

Zusätzliche Vorteile der erfindungsgemäßen Förderpumpe werden in dem feststellbaren höheren Förderdruck und in der Abstreiferfunktion des Stützringes gesehen, der den Einbauraum gegen den Hochdruckspalt abschirmt, durch den in der zu fördernden Flüssigkeit vielleicht enthaltener Schmutz in den Einbauraum eindringen könnte, wo er der Funktion und dem Bestand des Dichtungsringes schaden würde.

Bei der erfindungsgemäßen Förderpumpe ist vorzugsweise vorgesehen, daß der Stützring scheibenähnlich geformt ist und die Stirnflächen der Lippen des Dichtungsringes bedeckt, sodaß der Stützring nicht nur einfach herstellbar ist, sondern auch für eine vollständige axiale Abstützung der Stirnflächen der Ringlippen sorgt.

Eine vorteilhafte Ausführungsform der erfindungsgemäßen Förderpumpe zeichnet sich dadurch aus, daß die Stirnfläche der Haftlippe des Dichtungsringes und der bedeckende Teil der Oberfläche des Stützringes komplementär konisch gestaltet sind, wobei die Kegelöffnung zur Hochdruckseite weist. Durch die Kegelschräge wird die statische Abdichtung mittels der Haftlippe während des Saughubes des Plungers verbessert.

Bei der bekannten Dichtungsanordnung der eingangs genannten Art greift der Stützring wie gesagt am Grund der Ringnut des Dichtungsringes achsparallel an. Dies erfolgt bei einer vorteilhaften Ausführungsform der erfindungsgemäßen Förderpumpe dadurch, daß der Stützring einen achsparallelen ringförmigen Vorsprung gegen den Dackring aufweist. Dieser Stützring unterscheidet sich von dem bekannten Stützring also dadurch, daß er zwei ringförmige Vorsprünge radial nach innen bis zum Plunger bzw. radial nach außen bis zum Grund des Einbauraumes aufweist, welche an den außerhalb der Nut des Dichtungsringes gelegenen Teil des Stützringes einstückig angeformt sind.

Bei der erfindungsgemäßen Förderpumpe ist vorzugsweise vorgesehen, daß der Durchbruch des Stützringes mittels radialer Nuten an dessen Hochdruckseite und mittels achsparalleler Bohrungen gebildet ist. Die Nuten können beispielsweise Halbbohrungen sein und sich radial nach innen nur bis zu den in die Nut des Dichtungsringes zielenden Bohrungen erstrecken. Eine Erstreckung darüber hinaus bis zum radial äußeren Rand des Stützringes ist möglich und zweckmäßig, wenn eine achsparallele Beaufschlagung der Haftlippe des Dichtungsringes bei Hochdruck gewünscht wird, deren statisches Dichtvermögen dadurch erhöht würde. Vorzugsweise sind die Bohrungen in den Vorsprung des Stützringes niedergebrachte Sackbohrungen, die mit radialen Querbohrungen oder tangentialen Ausnehmungen des Vorsprunges versehen sind, um den mindestens einen Durchbruch des Stützringes von dessen Hoch- zu dessen Niederdruckseite zu schaffen.

Bei einer vorteilhaften Ausführungsform der erfindungsgemäßen Förderpumpe sind die hochdruckseitige Stirnfläche des Backringes und die anliegende Stirnfläche des Dichtungsringes komplementär konisch gestaltet, wobei die Kegelöffnung zur Niederdruckseite weist. Dadurch wird die statische Abdichtung mittels des Dichtungsringes ebenfalls verbessert, und zwar nun beim Druckhub des Plungers. Außerdem wird der Extrusionsschutz des Dichtungsringes verbessert.

Bei der erfindungsgemäßen Förderpumpe ist vorzugsweise vorgesehen, daß der Stützring aus dem gleichen Material besteht wie der Backring, der herkömmlich aus PTFE besteht.

Wahlweise können die achsparallelen Bohrungen, die einen Teil des Durchbruches des Stützringes von dessen Hoch- auf dessen Niederdruckseite darstellen, am radial äußeren und inneren Umfang des Stützringes angeordnet und als Nuten ausgebildet sein. Dadurch erhält man eine der Dichtwirkung günstige gleichzeitige Beaufschlagung der radial äußeren und inneren, axialen Stirnfläche der Haft- bzw. Dichtlippe des Dichtungsringes.

Im folgenden ist die Erfindung anhand zweier durch die Zeichnung beispielhaft dargestellter Ausführungsformen der erfindungsgemäßen Dichtungsanordnung und Varianten davon im einzelnen erläutert.

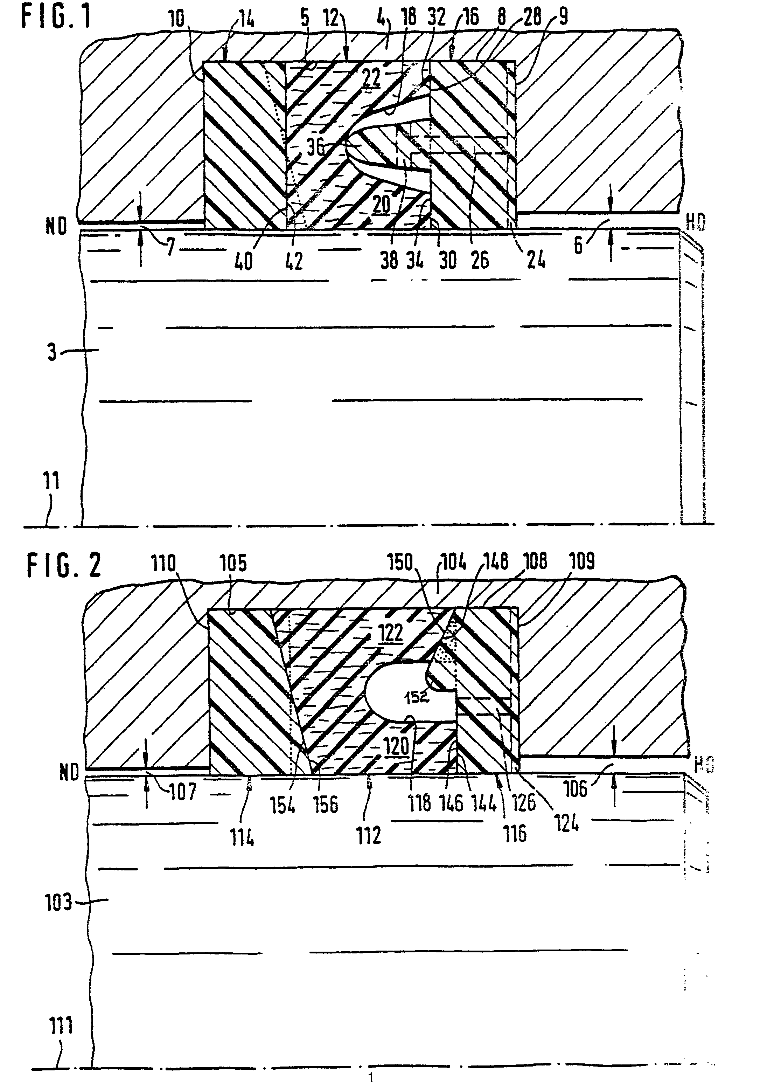

Die Fig. 1 und 2 der Zeichnung zeigen je einen halben Axialschnitt durch eine erste bzw. zweite Ausführungsform, wobei die Varianten durch punktierte Linien angedeutet sind.

Die erste Ausführungsform gemäß Fig. 1 ist besonders für radial relativ breite Dichtungsanordnungen geeignet, während die zweite Ausführungsform gemäß Fig. 2 für den Normalfall gedacht ist, in dem die radiale Breite der Dichtungsanordnung zu deren axialer Länge in den üblichen Verhältnissen steht.

In beiden Ausführungsbeispielen befindet sich jede der Dichtungsanordnungen zweimal zwischen der Hochdruckseite HD und der Niederdruckseite ND, um durch diese sogenannte Tandemanordnung eine bessere Abdichtung eines kreiszylindrischen Plungers 3 bzw. 103 zu erreichen, der zwischen der Hoch- und Niederdruckseite hochfrequent oszilliert und mit der Wandung 4 bzw. 104 eines rechteckig-ringnutförmigen Einbauraumes 5 bzw. 105 einen weiteren Ringspalt 6 bzw. 106 auf der Hochdruckseite sowie einen engeren Ringspalt 7 bzw. 107 auf der Niederdruckseite bildet, wobei zwischen beiden Ringspalten der Einbauraum liegt, der eine kreiszylindrische Ringfläche als Grund 8 sowie zwei parallele kreisringförmige Stirnflächen 9 und 10 auf der Hoch- bzw. Niederdruckseite aufweist.

Gemeinsam ist den beiden Ausführungsformen, daß die Dichtungsanordnungen aus je drei Einzelteilen bestehen, nämlich aus einem mittleren Dichtungsring 12 bzw. 112, aus einem niederdruckseitigen Backring 14 bzw. 114 und aus einem Stützring 16 bzw. 116, wobei der starre Backring und der ebenso starre Stützring den elastisch nachgiebigen Dichtungsring in den einander entgegengesetzten, durch die Plungerachse 11 bzw. 111 bestimmten Richtungen fixieren.

Der Dichtungsring 12 bzw. 112 weist im eingebauten Zustand, in dem er radial innen wie außen unter Vorspannung gegen den Nutgrund 8 bzw. 108 einerseits und den Plunger 3 bzw. 103 andererseits steht, eine im Profil parabolische bzw. halbovale Ringnut 18 bzw. 118 auf, die sich zur Hochdruckseite gegen die Stirnfläche 9 bzw. 109 öffnet und deren achsparallel gemessene Tiefe ungefähr die halbe axiale Länge des Dichtungsringes 12 bzw. 112 ausmacht. Die Ringnut 18 bzw. 118 trennt eine mit dem Plunger 3 bzw. 103 zusammenwirkende, dynamisch dichtende Dichtlippe 20 bzw. 120 und eine mit dem Nutgrund 8 bzw. 108 zusamnenwirkende, statisch dichtende Haftlippe 22 bzw. 122 voneinander und gibt diesen beiden Lippen die nötige radiale Beweglichkeit.

Der Stützring 16 bzw. 116 weist längs gleichmäßig auf den Umfang verteilter radialer Linien verlaufende durchgehende Nuten 24 bzw. 124, beispielsweise Halbbohrungen, auf, die von der Stirnfläche 9 bzw. 109 zur Hochdruckseite hin geschlossen sind und radial innen am Ringspalt 6 bzw. 106 beginnen. Von jeder Nut 24 bzw. 124 geht eine achsparallele Bohrung 26 bzw. 126 aus, die mit dem Hohlraum der Ringnut 18 bzw. 118 des Dichtungsringes 12 bzw. 112 in druckmediumleitender Verbindung steht, die für die zwei Ausführungsbeispiele verschieden ist, welche nun getrennt beschrieben werden.

Bei der ersten Ausführungsform weist der Dichtungsring 12 gemäß Fig. 1 zwei in einer Ebene senkrecht zur Plungerachse 11 sowie parallel zu den Stirnflächen 9 und 10 liegende, kreisringförmige Stirnflächen 28 und 30 der Haftlippe 22 bzw. Dichtlippe 20 an seiner Hochdruckseite auf. An

diesen Stirnflächen 28 und 30 liegen, diese vollständig bedeckend, zwei entsprechende konzentrische Stirnflächen 32 und 34 an der Niederdruckseite des Stützringes 16 plan an. Zwischen seinen beiden Stirnflächen 32 und 34 stößt der Stützring 16 mittels eines Vorsprunges 36 bis auf den Grund der Ringnut 18 des Dichtungsringes 12 gegen den Backring 14 vor, ohne die Ringnut radial außen oder innen auszufüllen. Der bis auf seinen Vorsprung 36 im Querschnitt rechteckige Stützring 16 weist als Bohrungen 26 Sackbohrungen auf, die im Vorsprung 36 enden, der mit radialen Querbohrungen 38 versehen ist, die den Durchbruch des Stützringes 16 von dessen Hochdruckseite auf dessen Niederdruckseite vollenden.

Die Grenze zwischen dem Dichtungsring 12 und dem Backring 14 verläuft ebenfalls in einer Ebene senkrecht zur Plungerachse 11 sowie parallel zu den Stirnflächen 9 und 10, in welcher eine niederdruckseitige kreisringförmige Stirnfläche 40 des Dichtungsringes 12 und eine gleiche Stirnfläche 42 des Backringes 14 aneinanderliegen.

Bei einer Variante der ersten Ausführungsform liegt die genannte Grenze schräg, das heißt die aneinanderliegenden Stirnflächen des Dichtungs- bzw. Backringes sind Kegelmantelflächen, die sich zur Niederdruckseite hin öffnen.

Bei der gleichen oder bei einer anderen Variante der ersten Ausführungsform fehlt der Vorsprung 36, sodaß die Bohrungen 26 durchgehende Bohrungen sind und der Stützring eine rein rechteckige Axialschnittfläche aufweist.

Es kann auch genügen, wenn die radialen Nuten 24 radial außen vor dem Nutgrund 8 an den Bohrungen 26 enden.

Dies gilt auch für die Nuten 124 und Bohrungen 126 der zweiten. Ausführungsform, bei der zwar noch eine der Paarung der Stirnflächen 30 und 34 der ersten Ausführungsform entsprechende Paarung zweier Stirnflächen 144 und 146 des Dichtungsringes 112 bzw. Stützringes 116 vorhanden ist, jedoch gemäß Fig. 2 eine Paarung komplementär konischer Stirnflächen 148 und 150 des Dichtungsringes 112 bzw. Stützringes 116 am Nutgrund 108, wo der Stützring an seinem radial äußeren Rand mit einem umlaufenden Vorsprung 152 versehen ist, dessen nasenähnliches Profil mit seiner Nasenspitze ins Innere der Ringnut 118 vorstößt, wobei die als durchgehende Bohrungen ausgebildeten Bohrungen 126 radial zwischen Vorsprung 152 und Dichtlippe 120 in den Hohlraum der Ringnut 118 münden.

Während die Kegelöffnung der sich an der Stirnfläche 150 des Stützringes 116 abstützenden Stirnfläche 148 des Dichtungsringes 112 zur Hochdruckseite weist, gilt das Umgekehrte für die komplementär konischen Stirnflächen 154 und 156 des Dichtungsringes 112 bzw. Backringes 114, deren Kegelöffnung zur Niederdruckseite weist.

Bei einer Variante der zweiten Ausführungsform ist die schräge Grenze zwischen Dichtungsring 112 und Backring 114 mittig auf eine Linie senkrecht zur plungerachse 111 gedreht, sodaß der Backring mit dem Backring 14 der ersten Ausführungsform übereinstimmt.

Bei der gleichen oder einer anderen Variante der zweiten Ausführungsform ist deren Vorsprung 152 beseitigt. Ersatzweise erstreckt sich die Haftlippe bis zum geänderten Stützring, wobei beide in der radialen Ebene der Stirnflächen 144 und 146 aneinanderliegen. Die Dichtungsanordnung ähnelt dann der Variante der ersten Ausführungsform, bei welcher der Vorsprung 36 fehlt.

Im Betrieb wechselt der Druck auf der Hochdruckseite beispielsweise zwischen 0 bar und 300 bar während auf der Niederdruckseite beispielsweise Atmosphärendruck herrscht. Der drosselnde Durchbruch des Stützringes von der Hoch- zur Niederdruckseite bewirkt dabei eine Druckentlastung der Ringnut des Dichtungsringes, sodaß dieser eine zusätzliche Schonung erfährt, ohne seine Dichtwirkung einzubüßen.

## Patentansprüche

1. Förderpumpe mit einem zwischen der Hochdruckseite (HD) und der Niederdruckseite (ND) hochfrequent oszillierenden Plunger (3) oder dergleichen, mit einem vom Plunger (3) abgedeckten ringnutförmigen Einbauraum (5) rechteckiger Querschnittfläche und mit einer in dem Einbauraum (5) statisch unbeweglichen, axialen Dichtungsanordnung von Stützring (16) auf der Hochdruckseite (HD), Dichtungsring (12) und Backring (14) auf der Niederdruckseite (ND), wobei a) mittig in dem Einbauraum (5) der einstückige Dichtungsring (12) aus gewebeverstärktem Kunststoffmaterial mit einer im Querschnittsprofil ausgerundeten Ringnut (18) zwischen einer den Grund (8) des Einbauraumes (5) statisch abdichtenden Haftlippe (22) und einer den Plunger (3) dynamisch abdichtenden Dichtlippe (20) angeordnet ist, wobei zwei der hochdruckseitigen Stirnfläche (9) des Einbauraumes (5) zugewandte ringförmige ebene Stirnflächen (28, 30) der beiden Lippen bezüglich der mit der Plungerachse (11) zusammenfallenden Achse der Anordnung koaxial und gegebenenfalls koplanar sind; b) niederdruckseitig in dem Einbauraum (5) der wesentlich härtere, scheibenähnliche Backring (14) angeordnet ist, der sich an der niederdruckseitigen Stirnfläche (10) des Einbauraumes sowie an dessen Grund abstützt und eine Extrusion des Dichtungsringes in den an den Einbauraum niederdruckseitig anschließenden Ringspalt (7) zwischen Plunger und Wandung (4) des Einbauraumes verhindert; und c) hochdruckseitig in dem Einbauraum (5) der steife Stützring (16) angeordnet ist, der einerseits am Dichtungsring und andererseits flächig an der hochdruckseitigen Stirnfläche des Einbauraumes anliegt; dadurch gekennzeichnet, daß der Stützring (16 ; 116) an den Stirnflächen (28, 30 ; 144, 148) der Lippen (22, 22 ; 120, 122) des Dichtungsringes (12 ; 112) eben anliegt, sich am Grund (8 ; 108) des Einbauraumes (5 ; 105) abstützt und sich der dynamischen Dichtlippe (20 ; 120) in den an den Einbauraum hochdruckseitig anschließenden ringförmigen Hochdruckspalt (6 ; 106) zwischen dem Plunger (3 ; 103) und der Wandung (4-104) des Einbauraumes (5) verhindert; und daß die zwei einander abgekehrten axialen Stirnseiten des Stützringes (16 ; 116) mittels wenigstens eines Druchbruches (24, 26, 38 ; 124, 126), der das Druckmedium vom Hochdruckspalt (6 ; 106) in die Ringnut (18 ; 118) des Dichtungsringes (12 ; 112) leitet, miteinander verbunden sind.

2. Förderpumpe nach Anspruch 1, dadurch gekennzeichnet ; daß der Stützring (16 ; 116) scheibenähnlich geformt ist und die Stirnflächen (28, 30 ; 144, 148) der Lippen (20, 22 ; 120, 122) des Dichtungsringes (12 ; 112) bedeckt.

3. Förderpumpe nach Anspruch 2, dadurch gekennzeichnet, daß die Stirnfläche (148) und der bedeckende Teil (150) der Oberfläche des Stützringes (116) komplementär konisch gestaltet sind, wobei die Kegelöffnung zur Hochdruckseite weist.

4. Förderpumpe nach einem der Ansprüche 1 bis 3, wobei der Stützring (16) am Grund der Ringnut (18) des Dichtungsringes (12) achsparallel angreift, dadurch gekennzeichnet, daß der Stützring (16) einen achsparallelen ringförmigen Vorsprung (36) gegen den Backring (14) aufweist.

5. Förderpumpe nach einem der Ansprüche 1 bis 4, dadurch gekennzeichnet daß der Durchbruch (24, 26, 38 ; 124, 126) des Stützringes (16 ; 116) mittels radialer Nuten (24 ; 124) an dessen Hochdruckseite und mittels achsparalleler Bohrungen (26 ; 126) gebildet ist.

6. Förderpumpe nach den Ansprüchen 4 und 5, dadurch gekennzeichnet, daß die Bohrungen in den Vorsprung (36) niedergebrachte Sackbohrungen (26) sind, die mit radialen Querbohrungen (38) oder tangentialen Ausnehmungen des Vorsprunges versehen sind.

7. Förderpumpe nach einem der Ansprüche 1 bis 6, dadurch gekennzeichnet, daß die hochdruckseitige Stirnfläche (156) des Backringes (114) und die anliegende Stirnfläche (154) des Dichtungsringes (112) komplementär konisch gestaltet sind, wobei die Kegelöffnung zur Niederdruckseite weist.

8. Förderpumpe nach einem der Ansprüche 1 bis 7, dadurch gekennzeichnet, daß der Stützring (16 ; 116) aus dem gleichen Material, z. B. PTFE, besteht wie der Backring (14 ; 114).

9. Förderpumpe nach Anspruch 7 oder 8 in Verbindung mit Anspruch 5, dadurch gekennzeichnet, daß die achsparallelen Bohrungen am radial inneren und äußeren Umfang des Stützringes angeordnet und als Nuten ausgebildet sind.

## Claims

1. A feed pump having, between the high-pressure side (HD) and the low-pressure side (ND), a high frequency oscillating plunger (3) or the like with, masked by the plunger (3) and shaped like an annular groove, an installation space (5) of rectangular cross-sectional area and with, statically immovable in the installation space (5), an axial seal arrangement of thrust ring (16) on the high-pressure side (HD), packing ring (12) and back-up ring (14) on the low-pressure side (ND), there being a) centrally in the installation space (5) a one-piece packing ring (12) of fabric reinforced synthetic plastics material with a cross-sectionally round annular groove (18) between an adhesive lip (22) which statically seals the bottom (8) of the installation space (5) and a sealing lip (20) which dynamically seals the plunger (3), two annular flat end faces (28, 30) of the two lips which are towards the high pressure end face (9) of the installation space (5) being coaxial of that axis of the arrangement which coincides with the plunger axis (11) and being likewise coplanar, b) there being on the low-pressure side (ND), in the installation space (5), the substantially harder disc-like back-up ring (14) which bears on the low-pressure side end face (10) of the installation space (5) and on the bottom thereof preventing an extrusion of the packing ring into the annular gap (7) adjacent the installation space on the low-pressure side and existing between the plunger and the wall (4) of the installation space, and c) there being on the high pressure side in the installation space (5) in the rigid thrust ring (16) which bears on one side on the packing ring and on the other flat against the high-pressure side end face of the installation space, characterised in that the thrust ring (16 ; 116) bears flat on the end faces (28, 30 ; 144, 148) of the lips (20, 22 ; 120, 122) of the packing rings (12 ; 112), is braced in the bottom (8 ; 108) of the installation space (5 ; 105) and extends radially inwardly sufficiently far that the thrust ring prevents an extrusion of the dynamic sealing lip (20 ; 120) into the annular high-pressure gap (6 ; 106) between the plunger (3 ; 103) and the wall (4 ; 104) of the installation space (5) which adjacent this latter on the high-pressure side ; and in that the two remotely facing axial end faces of the thrust ring (16 ; 116) are connected to each other by at least one aperture 24, 26, 38 ; 124, 126) through which pressurised medium is passed from the high-pressure gap (6 ; 106) into the annular groove (18 ; 118) in the packing ring (12 ; 112).

2. A feed pump according to Claim 1, characterised in that the thrust ring (16 ; 116) is shaped like a disc and masks the end faces (28, 30 ; 144, 148) of the lips (20, 22 ; 120, 122) of the packing ring (12 ; 112).

3. A feed pump according to Claim 2, characterised in that the end face (148) and the masking part (150) of the surface of the thrust ring (116) are of matchingly conical shape, the cone aperture pointing towards the high pressure side.

4. A feed pump according to one of Claims 1 to 3, the thrust ring (16) engaging the bottom of the annular groove (18) of the packing ring (12) in an axially parallel direction, characterised in that the thrust ring (16) has an axially parallel annular projection (36) pointing towards the back-up ring (14).

5. A feed pump according to one of Claims 1 to 4, characterised in that the break (24, 26, 38 ; 124, 126) in the thrust ring (16 ; 116) consists of radial grooves (24 ; 124) on the high-pressure side and axially parallel bores (26 ; 126).

6. A feed pump according to Claims 4 and 5, characterised in that the bores are blind bores (26) made into the projection (36) and which are provided with radial transverse bores (38) or tangential recesses in the projection.

7. A feed pump according to one of Claims 1 to 6, characterised in that the high-pressure side end face (156) of the back-up ring (114) and the (bearing on it) end face (154) of the packing ring (112) are of complementary matching conical shape, the cone aperture pointing to the low-pressure side.

8. A feed pump according to one of Claims 1 to 7, characterised in that the thrust ring (16 ; 116) consists of the same material, e. g. PTFE, as the back-up ring (14 ; 114).

9. A feed pump according to Claim 7 or 8 in conjunction with Claim 5, characterised in that the axially parallel bores are disposed on the radially inner and outer periphery of the thrust ring and are constructed as grooves.

**Revendications**

1. Pompe aspirante et foulante comportant un piston plongeur (3) ou analogue oscillant à haute fréquence entre le côté haute pression (HD) et le côté basse pression (ND), un espace de montage (5) à section rectangulaire en forme de rainure annulaire, recouvert par le piston plongeur (3), et un dispositif d'étanchéité axial statiquement immobile dans l'espace de montage (5) et composé d'une bague d'appui (16) sur le côté haute pression (HD), d'une bague d'étanchéité (12) et d'une bague de retenue (14) sur le côté basse pression (ND), de telle sorte que a) centralement dans l'espace de montage (5) est disposée la bague d'étanchéité (12) formée d'une seule pièce en matière synthétique renforcée par du tissu et ayant une rainure annulaire (18) exécutée dans le profil de sa section entre une lèvre d'accrochage (22) étanchéifiant statiquement le fond (8) de l'espace de montage (5) et une lèvre d'étanchéité (20) étanchéifiant dynamiquement le piston plongeur 3, deux faces frontales annulaires planes (28, 30) des deux lèvres, tournées vers la face frontale (9) côté haute pression de l'espace de montage (5) étant coaxiales et éventuellement coplanaires par rapport à l'axe du dispositif coincidant avec l'axe (11) du piston plongeur, b) il est monté du côté basse pression dans l'espace de montage (5) la bague de retenue (14) en forme de disque sensiblement plus dure qui prend appui sur la face frontale (10) côté basse pression de l'espace de montage ainsi que sur le fond de celui-ci et empêche la bague d'étanchéité d'être extrudée dans la fente annulaire (7) située entre le piston plongeur et la paroi (4) de l'espace de montage et qui fait suite du côté basse pression à l'espace de montage ; et c) du côté haute pression est montée dans l'espace de montage (5) la bague d'appui rigide (16) qui prend appui d'une part contre la bague d'étanchéité et d'autre part à plat contre la face frontale côté haute pression de l'espace de montage, caractérisée en ce que la bague d'appui (16 ; 116) se trouve uniformément en contact avec les faces frontales (28, 30 ; 144, 145) des lèvres (20, 22 ; 120, 122) de la bague d'étanchéité (12 ; 112), prend appui sur le fond (8 ; 108) de l'espace de montage (5 ; 105) et s'étend radialement suffisamment vers l'intérieur pour qu'elle empêche la lèvre d'étanchéité dynamique (20 ; 120) d'être extrudée dans la fente annulaire (6 ; 106) à haute pression située entre le piston plongeur (3 ; 103) et la paroi (4 ; 104) de l'espace de montage (5) et faisant suite à ce dernier du côté haute pression ; et en ce que les deux côtés frontaux axiaux opposés de la bague d'appui (16 ; 116) sont entre eux en communication au moyen d'au moins une traversée (24, 26, 38 ; 124, 126) qui dirige le fluide sous pression à partir de la fente à haute pression (6 ; 106) dans la rainure annulaire (18 ; 118) de la bague d'étanchéité (12 ; 112).

2. Pompe aspirante et foulante selon la revendication 1, caractérisée en ce que la bague d'appui (16 ; 116) est réalisée en forme de disque et recouvre les faces frontales (28, 30 ; 144, 148) des lèvres (20, 22 ; 120, 122) de la bague d'étanchéité (12 ; 112).

3. Pompe aspirante et foulante selon la revendication 2, caractérisée en ce que la face frontale (148) et la partie recouvrante (150) de la surface de la bague d'appui (116) sont coniques de manière complémentaire, l'ouverture conique étant dirigée vers le côté haute pression.

4. Pompe aspirante et foulante selon l'une quelconque des revendications précédentes, la bague d'appui (16) s'engageant, parallèlement à l'axe du dispositif, sur le fond de la rainure annulaire (18) de la bague d'étanchéité (12), caractérisée en ce que la bague d'appui (16) présente une saillie annulaire (36) parallèle à l'axe du dispositif et qui pointe vers la bague de retenue (14).

5. Pompe aspirante et foulante selon l'une quelconque des revendications précédentes, caractérisée en ce que la traversée (24, 26, 38 ; 124, 126) de la bague d'appui (16, 116) est formée de rainures radiales (24 ; 124) situées du côté haute pression de la bague d'appui et de forures (26 ; 126) parallèles à l'axe du dispositif.

6. Pompe aspirante et foulante selon la revendication 4 ou 5, caractérisée en ce que les forures sont des trous borgnes (26) forés dans la saillie (36) et qui sont munis de forures transversales radiales (38) ou d'évidements tangentiels dans la saillie.

7. Pompe aspirante et foulante selon l'une quelconque des revendications précédentes, caractérisée en ce que la face frontale (156) côté haute pression de la bague de retenue (114) et la face frontale (154) de la bague d'étanchéité (112) qui y prend appui sont coniques de façon complémentaire, l'ouverture conique étant orientée vers le côté basse pression.

8. Pompe aspirante et foulante selon l'une quelconque des revendications précédentes, caractérisée en ce que la bague d'appui (16 ; 116) est en la même matière, par exemple du PTFE, que la bague de retenue (14 ; 114).

9. Pompe aspirante et foulante selon la revendication 7 ou 8 en combinaison avec la revendication 5, caractérisée en ce que les forures parallèles à l'axe du dispositif sont disposées sur la périphérie radialement intérieure et extérieure de la bague d'appui et sont réalisées en tant que rainures.

EP 0 172 414 B1

FIG. 1

FIG. 2